# EUROPÄISCHE PATENTSCHRIFT

(11) **EP 0 616 088 B1**
(45) Veröffentlichungstag und Bekanntmachung des Hinweises auf die Patenterteilung: **30.07.1997**
(21) Anmeldenummer: 94103317.7
(22) Anmeldetag: 04.03.1994
(51) Int. Cl.: E04B 1/19, E04B 7/00, F16B 7/04, E04B 2/76, E04B 1/24

(54) **Ebener oder räumlicher Deckenrost aus Stäben und Knotenstücken, insbesondere begehbarer Deckenrost**
Planar or spatial lattice cover, in particular lattice cover walkway, made of rods and connector elements
Couverture à résille plane ou spatiale, en particulier couverture à résille adaptée à la marche, formée de profiles et de noeuds

(30) Priorität: 19.03.1993 DE 4308745
(43) Veröffentlichungstag der Anmeldung: 21.09.1994
(73) Patentinhaber: MERO-Raumstruktur GmbH & Co. Würzburg, 97084 Würzburg (DE)
(72) Erfinder: Stumpf, Walter, D-97204 Höchberg (DE)
(74) Vertreter: Böck, Bernhard, Dipl.-Ing.

(56) Entgegenhaltungen:
- EP-A- 0 104 150
- DE-A- 1 816 647
- DE-A- 3 007 987
- DE-U- 8 616 463
- US-A- 2 929 473
- US-A- 3 477 189
- US-A- 3 768 216
- US-A- 5 003 741

## Beschreibung

Die Erfindung bezieht sich auf einen ebenen oder räumlichen Deckenrost aus Stäben und Knotenstücken, insbesondere begehbaren Deckenrost, mit Stützen, nach dem Oberbegriff des Ansprüchs 1.

Ein räumlicher Deckenrost, der beispielsweise für mehrgeschossige Messestände bestimmt ist, ist durch den Prospekt der MERO-Raumstruktur GmbH & Co. Würzburg, D433MF2.90 bekannt. Dieser Deckenrost ist mit Bodenplatten versehen und somit begehbar. Die Bodenplatten sind auf den Gurtstäben und Knotenstücken des Obergurts aufgelagert und dabei auf Stoß verlegt. Die Knotenstücke weisen Gewindebohrungen auf, an welchen die Stäbe im Ober- und Untergurt des Deckenrostes sowie dessen Diagonalstäbe, aber auch die Stützen, welche diesen Deckenrost tragen, angschraubt sind. Diese Konstruktion ist baulich aufwendig und erfordert auch einen relativ hohen Montageaufwand.

Es ist ferner bei Raumfachwerkplatten bekannt, die Stäbe des Obergurts an den Knotenstücken nicht nur anzuschrauben, sondern auch aufzulagern, um die Schraubanschlüsse von Scherkräften zu entlasten.

Aus der DE-A-1 816 647 ist ein Deckenrost aus Stäben, Knotenstücken und Stützen bekannt, bei dem die Stützen ein mit den Knotenstücken übereinstimmendes längsgeschlitztes Profil aufweisen und die Stützen in ihrem Anschlußbereich die Knotenstücke ersetzen. Als Anschlußelemente zum Anschluß der Stäbe an die Knotenstücke und Stützen dienen Profilstücke, die über eine erste Schraubverbindung mit den Stäben und eine zweite Schraubverbindung mit den Knotenstücken oder Stützen verbunden sind.

Der Erfindung liegt die Aufgabe zugrunde, einen ebenen oder räumlichen Deckenrost aus Stäben und Knotenstücken zu schaffen, der montagefreundlicher ist.

Diese Aufgabe wird durch einen Deckenrost mit den Merkmalen des Anspruchs 1 gelöst.

Gemäß der Erfindung wird obige Aufgabe dadurch gelöst, daß die Stützen und Knotenstücke ein gleiches längsgeschlitztes Profil aufweisen und die Stützen in ihrem Anschlußbereich die Knotenstücke ersetzen, und daß die zum Beispiel aus Rechteckprofilrohren bestehenden Gurtstäbe des Deckenrostes an den Knotenstücken und Stützen durch in deren Schlitze befestigbare Klemmverschlüsse anschließbar sind. Die Knotenstücke haben demzufolge das gleiche Querschnittsprofil wie die Stützen und können zum Beispiel aus einem Strangpressprofil aus Aluminium hergestellt werden, von dem die Knotenstücke abgeschnitten werden. Die Stützen ersetzen vorteilhaft in ihrem Anschlußbereich die Knotenstücke, denn die Gurtstäbe des Deckenrostes lassen sich auch an den Stützen mittels der gleichen Klemmverschlüsse anschließen. Die Forderung nach einer einfachen Montage wird durch eine schnelle und funktionssichere Klemmverschlußtechnik erfüllt. Der Deckenrost kann vorteilhaft am Boden vormontiert werden, ebenso wie im freien Vorbau. Wenn Rechteckprofilrohre als Gurtstäbe, vor allem im Obergurt des Deckenrostes verwendet werden, ermöglichen diese in Verbindung mit den Knotenstücken die direkte Auflagerung von Bodenplatten auf dem Deckenrost, wenn letzterer zum Beispiel für begehbare Mehrgeschoß-Messestände eingesetzt wird. Die erfindungsgemäßen Deckenroste können aber auch für dekorative Zwecke verwendet werden und es ist auch möglich, nach dem erfindungsgemäßen System großflächige Deckenroste aus Gitterträger-Elementen und Profilstützen herzustellen. Die Gurtstäbe bilden in diesem Fall Teile dieser Gitterträger-Elemente. Die Erfindung ermöglicht somit die Herstellung ebener oder räumlicher Deckenroste für unterschiedlichste Zwecke auf sehr wirtschaftliche Weise.

Ausgestaltungen der Erfindung gehen aus den Unteransprüchen hervor. So können die Stützen und Knotenstücke ein Mehrkantprofil, ein Kreuzprofil oder ein anderes mehrarmiges bzw. mehrstegiges Profil aufweisen. Das Mehrkantprofil kann zum Beispiel ein Vierkant-, Sechskant- oder Achtkantprofil sein.

Nach einer weiteren Ausgestaltung der Erfindung sind die Knotenstücke an einer Stirnseite durch Knotensegmente mit Gewindebohrungen zum Schraubanschluß von Diagonalstäben eines räumlichen (zweilagigen) Deckenrostes ergänzt. Das Knotensegment, welches zum Beispiel ein Kugelknotensegment sein kann, kann mit dem Knotenstück auf verschiedene Art und Weise verbunden werden. Die Knotensegmente dienen der Verbindung der Diagonalstäbe des räumlichen Deckenrostes nach ansich bekannter Anschlußtechnik.

Wenn nach einer weiteren Ausgestaltung der Erfindung die Knotensegmente gegenüber den Knotenstücken drehbar und feststellbar angeordner sind, kann das Knotensegment in beliebigen Positionen gegenüber dem Knotenstück mit dem längsgeschlitzten Profil positioniert werden, sodaß verschiedene Raumfachwerke-Geometrien möglich sind, ohne daß ein weiterer Knotentyp erforderlich wird. Diese Möglichkeit bringt weitere Einsparungen bei der Herstellung und Montage.

Nach noch einer weiteren Ausgestaltung der Erfindung ist das Knotensegment mittels einer sich durch zentrale Bohrungen im Knotenstück und in einer Kopfplatte erstreckenden Schraube mit dem Knotenstück verbunden.

Wenn nach noch einer weiteren Ausgestaltung der Erfindung die das Knotenstück mit dem Knotensegment verbindende Schraube nach oben verlängert ist und zugleich zur Befestigung eines auf dem Deckenrost stehenden Stabes, zum Beispiel eines Geländerstabes dient, erfüllt die Schraube vorteilhaft eine Doppelfunktion.

Wenn nach noch einer weiteren Ausgestaltung der Erfindung die Kopfplatte mit vier kreuzförmig angeordnete Haltedorne für auf dem Deckenrost zu verlegende Bodenplatten versehen ist, die entsprechende Ausnehmungen zur Aufnahme der Halte-bzw. Fixierzapfen aufweisen, erfüllt die Kopfplatte gleichfalls vorteilhaft zwei Funktionen.

Wenn nach noch einer weiteren Ausführungsform der Erfindung die Gurtstäbe des Deckenrostes zusätzlich auf den Knotenstücken und Stützen aufgelagert sind, wird die Montage weiter vereinfacht. Außerdem werden Belastungskräfte von den Gurtstäben direkt auf die Knotenstücke und Stützen abgetragen.

Noch eine weitere Ausgestaltung der Erfindung ist dadurch gekennzeichnet, daß die Klemmverschlüsse jeweils zwei um lotrechte Achsen in den Enden der Gurtstäbe drehbar gelagerte Klemmbacken aufweisen, die durch eine Feder in ihre unwirksame Ausgangslage zusammengehalten werden und durch eine Stellschraube in ihre wirksame Lage spreizbar sind, in welcher die äußeren profilierten Enden der Klemmbacken form- und kraftflüssig in die entsprechend profilierten Schlitze in den Knotenstücken und Stützen eingreifen. Die Lagerbolzen für die Klemmbacken übertragen dabei Zug- und Druckkräfte im Ober- und Untergurt des Deckenrostes.

Wenn nach noch einer weiteren Ausführungsform der Erfindung die Stützen an ihren oberen Enden mit der Oberseite des Deckenrostes abschließen, können Bodenplatten unmittelbar auf die Gurtstäbe im Obergurt des Deckenrostes aufgelagert werden, um einen begehbaren Deckenrost zu erhalten.

Bei zum Beispiel großflächigen dekorativen Deckenrosten können vorteilhaft die Stützen mit ihren oberen Enden pylonartig über dem Deckenrost hervorstehen. In diesem Fall kann zwischen den oberen Enden der Stützen und dem Deckenrost mittels Seile eine Verspannung vorgesehen sein. Man erreicht dadurch relativ große Spannweiten.

Noch eine weitere Ausführungsform der Erfindung ist dadurch gekennzeichnet, daß der Deckenrost aus Gitterträger-Elementen besteht, die hochkant an den Stützen und Knotenstücken angeschlossen sind, deren Länge im wesentlichen der Bauhöhe der Gitterträger-Elemente entspricht. Auf diese Weise können gleichfalls großflächige Deckenroste ausgebildet werden, wobei die Gitterträger-Elemente direkt mit Hilfe der Klemmverschlüsse an den Stützen angeschlossen werden können, welche das gleiche längsgeschlitzte Profil wie die Kontenstücke aufweisen.

Eine weitere Variante eines dekorativen Deckenrostes ist dadurch gekennzeichnet, daß die Lücken zwischen den Gitterträger-Elementen durch Abschlußelemente, zum Beispiel Segel oder Membranen aus textilem Material ausgefüllt sind.

Nach noch einer weitere Ausgestaltung der Erfindung sind in die einander gegenüberliegenden Längsschlitze benachbarter Stützen unterhalb des Deckenrostes Wandelemente einsetzbar. Diese vorteilhafte Möglichkeit eines Wandanschlusses ergibt sich durch das spezielle länggeschlitzte Profil der Stützen.

Noch eine weitere Ausführungsform der Erfindung ist dadurch gekennzeichnet, daß in die Längsschlitze der Stützen unterhalb des Deckenrostes Anschlußprofile für Wandelemente einklemmbar sind. Dadurch besteht die Möglichkeit, Wandelemente an den Stützen so zu befestigen, daß die Skelettkonstruktion verdeckt, das heißt unsichtbar ist, was besonders bei Messe- oder Ausstellungsständen erwünscht sein kann.

Die Erfindung wird anschließend anhand der Zeichnungen von Ausführungsbeispielen erläutert. Es zeigen:
- Fig. 1: eine Schrägansicht eines räumlichen (zweilagigen) Deckenrostes, der beispielsweise von vier Stützen getragen wird, deren Querschnittsprofil demjenigen der Knotenstücke des Deckenrostes entspricht;
- Fig. 2: einen vergrößerten Ausschnitt des Deckenrostes der Fig. 1 im Bereich einer Ecke, jedoch mit Bodenplatten und einem Geländer;
- Fig. 2a: ein Detail am Rande des Deckenrostes der Fig. 1 und 2, welches einen stehenden Geländerstab und dessen Befestigung am Deckenrost zeigt;
- Fig. 3: eine Schrägansicht eines Knotenpunktdetails des Deckenrostes der Fig. 1 und 2, teilweise in auseinandergezogenem Zustand, um den Anschluß der Gurtstäbe an ein kreuzblockförmiges Knotenstück mittels Klemmverschlüsse zu veranschaulichen;
- Fig. 4: eine Seitenansicht des Knotenpunktdetails der Fig. 3 im fertig montierten Zustand mit aufgelagerten Bodenplatten;
- Fig. 5 und 6: je eine Ansicht eines der Gurtprofilstäbe von unten
bzw. oben, welche bei dem Deckenrost der Fig. 1 bis 4 eingesetzt sind;
- Fig. 7: eine Schrägansicht eines ebenen bzw. einlagigen Deckenrostes, wobei auch hier die Stützen und Knotenstücke des Deckenrostes das gleiche Querschnittsprofil aufweisen;
- Fig. 8: einen Ausschnitt aus dem Deckenrost der Fig. 7, um den Anschluß der aus Rechteckprofilrohren bestehenden Gurtstäbe an einer Stütze zu zeigen;
- Fig. 9: eine Schrägansicht eines Deckenrostes aus Gitterträger-Elementen;
- Fig. 10: eine weitere Schrägansicht eines Deckenrostes aus Gitterträger-Elementen und Profilstützen, die pylonartig über die Gitterträger-Elemente hinausgeführt sind und eine Verspannung mittels Drahtseilen ermöglichen;
- Fig. 11: eine Schnittansicht eines längsgeschlitzten Achtkantprofils für Stützen und Knotenstücke, welches z.B. an die Stelle des Kreuzprofils von Fig. 3 treten kann;
- Fig. 12: eine Draufsicht eines Gurtprofilstabs, teilweise im Schnitt, der über Klemmverschlüsse an zwei Knotenstücke oder Stützen mit dem Querschnittsprofil der Fig. 11 angeschlossen und aufgelagert ist;
- Fig. 13 und 14: je eine Ansicht des Gurtprofilstabs der Fig. 12 von unten bzw. oben;
- Fig. 15: einen Schnitt eines längsgeschlitzten vierarmigen Profils für Stützen und Knotenstücke, welches auch spezielle Anschlüsse von Wandelementen ermöglicht, die die Knotenstücke bzw. Stützen nach außen abdecken;
- Fig. 16: eine Schnittansicht z.B. einer Stütze mit dem Profil der Fig. 15 und von Teilen eines Gurtprofilstabs und Wandelementen, die an der der Stütze befestigt sind und
- Fig. 17: eine Detailansicht, die ein Verbindungsstück zum Anschluß eines Wandelements entsprechend Fig. 16 zeigt.

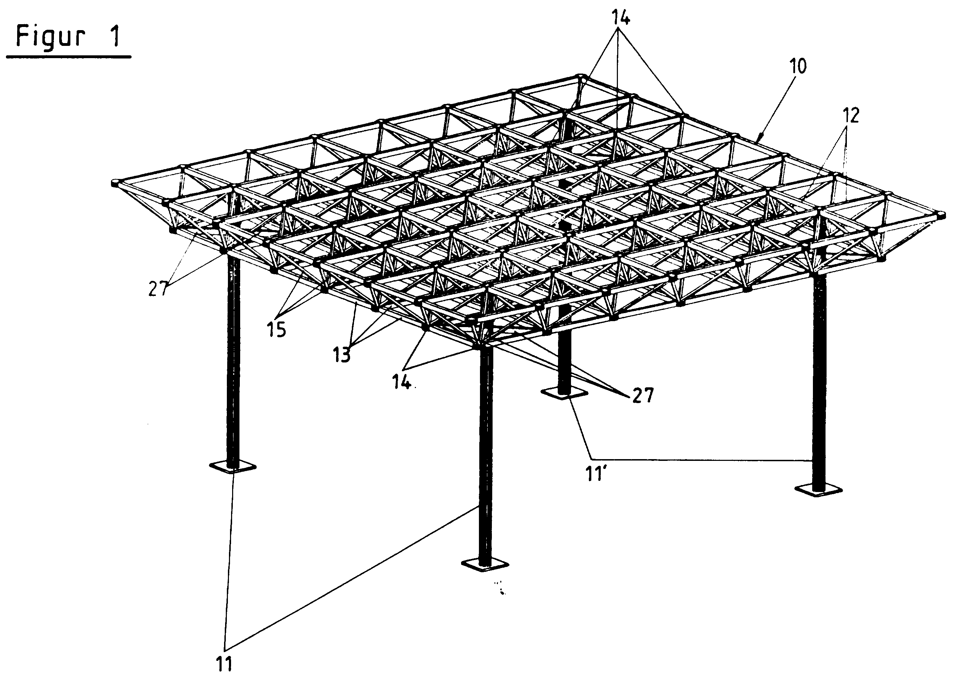

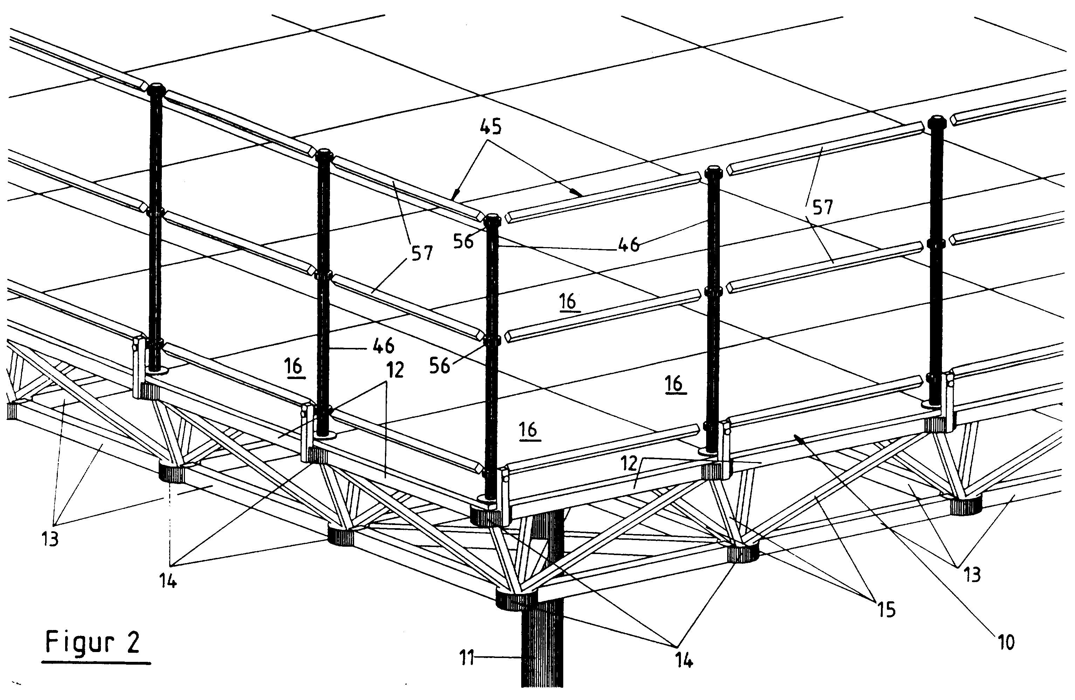

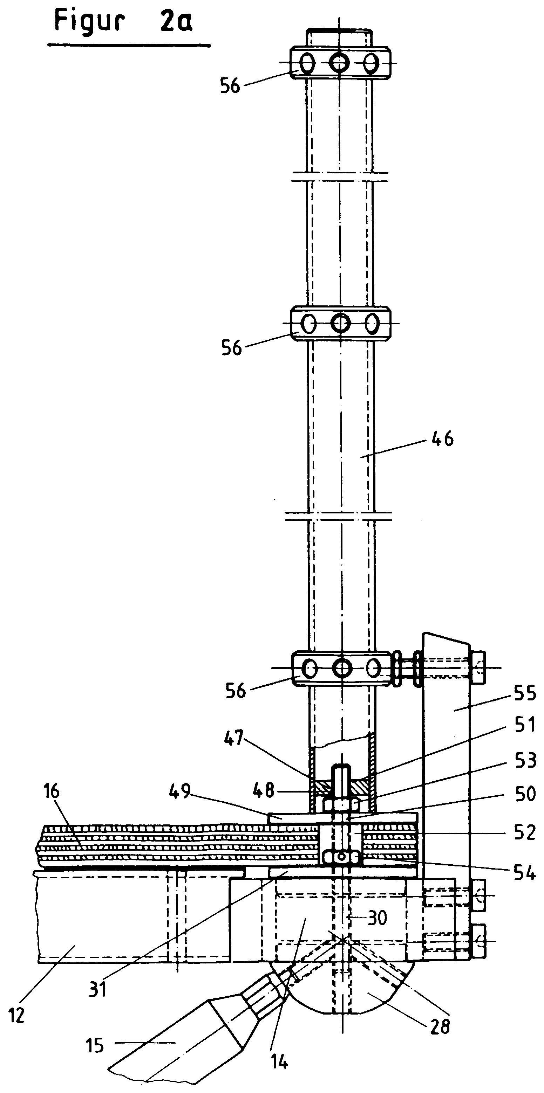

Der in den Fig. 1 und 2 gezeigte räumliche (zweilagige) Deckenrost 10 hat beispielsweise einen rechteckigen Grundriß und wird von vier Stützen 11, 11' getragen, von welchen die beiden vorderen Stützen 11 sogenannte eingespannte Stützen und die beiden hinteren 11' sogenannte Pendelstützen sind, was noch erläutert wird. Die Stäbe 12 des Obergurts und die Stäbe 13 des Untergurts bestehen aus gleichen Rechteckprofilrohren, welche an Knotenstücke 14 angeschlossen sind, die ihrerseits durch Diagonalstäbe 15 untereinander verbunden sind. Die Stützen 11, 11' und Knotenstücke 14 weisen ein gleiches längsgeschlitztes Profil, beispielsweise ein Kreuzprofil auf, wobei die Stützen 11, 11' in ihrem Anschlußbereich die Knotenstücke 14 ersetzen. Bei dem räumlichen Deckenrost 10 handelt es sich um eine begehbare Ausführung (Fig. 2) und auf diesem Deckenrost 10 sind demzufolge Bodenplatten 16 aufgelagert, die ihrerseits auf Stoß verlegt sind und einen quadratischen Grundriß aufweisen, der dem Raster des Deckenrostes 10 angepaßt ist.

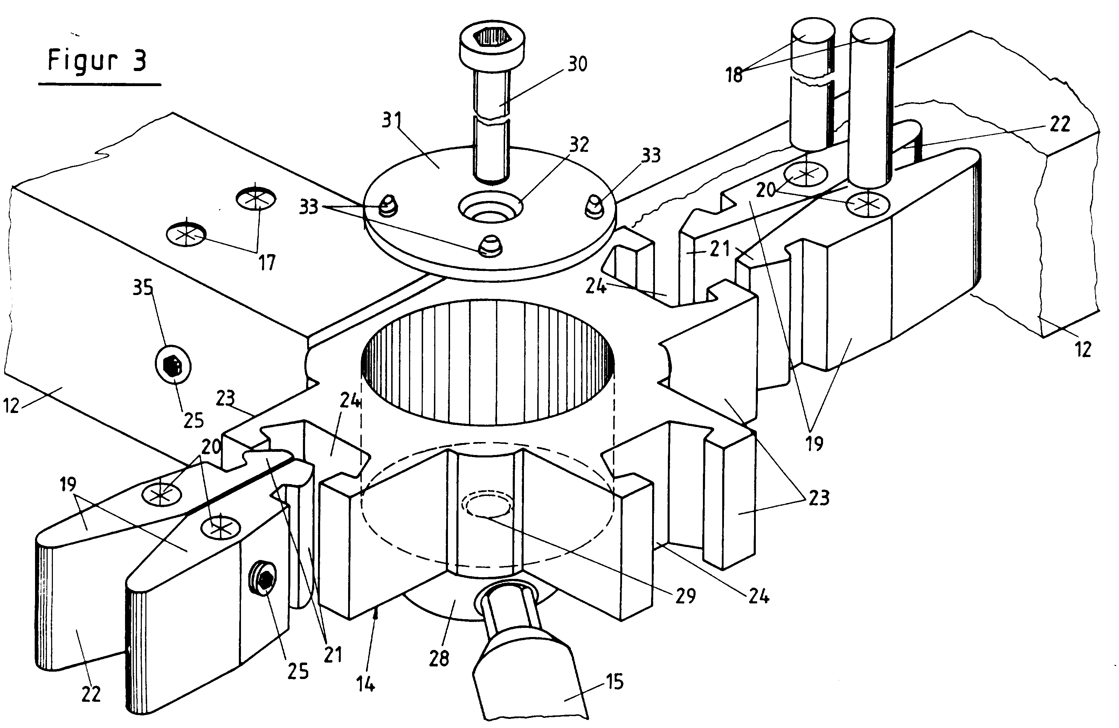

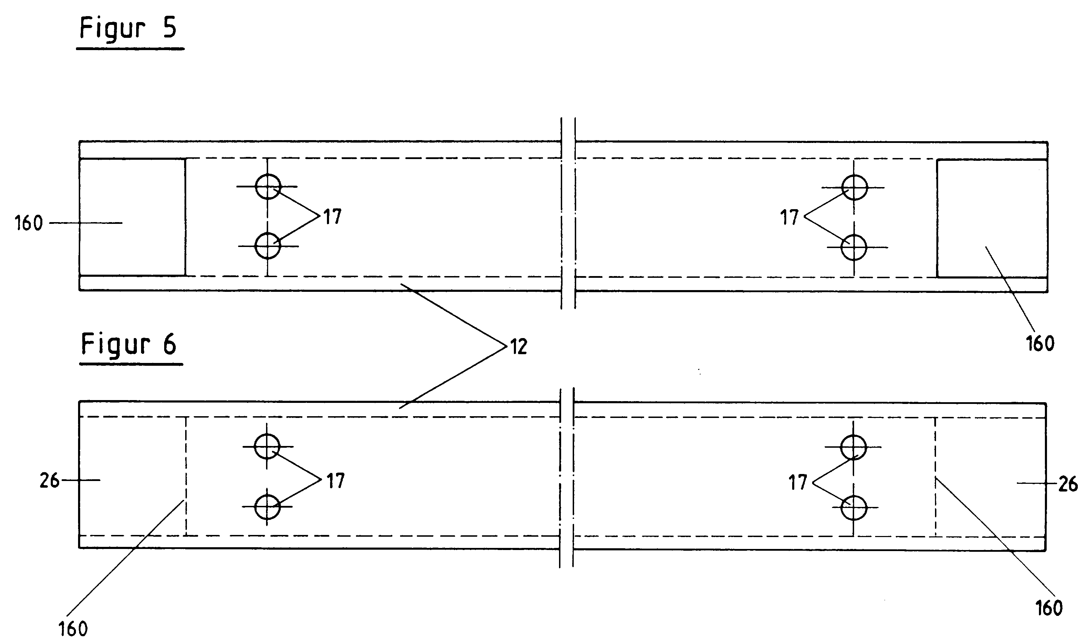

Es wird nun auf die Fig. 3 bis 6 Bezug genommen. In den Fig. 5 und 6 ist ein Gurtstab 12 gezeigt, der aus einem Rechteckprofilrohr besteht und an seiner Unterseite an beiden Enden je eine Ausklinkung 160 aufweist. Die Stäbe 13 im Untergurt entsprechen den Stäben 12 im Obergurt. Ferner enthält jeder Gurtstab 12 bzw. 13 im Bereich seiner Enden Paare von Bohrungen 17 in seiner oberen und unteren Wandung, die vertikal aufeinander ausgefluchtet sind und zur Aufnahme von Lagerbolzen 18 für Klemmbacken 19 dienen (Fig. 3). Die Klemmbacken 19 sind zu diesem Zweck mit entsprechenden Bohrungen 20 versehen, durch welche sich die Lagerbolzen 18 erstrecken. Je zwei Klemmbacken 19 bilden in den Enden der Gurtstäbe 12 und 13 einen Klemmverschluß, der die Anbindung der Gurtstäbe 12, 13 an die Knotenstücke 14 bzw. Stützen 11, 11' ermöglicht. Die Klemmbacken 19 weisen äußere, hakenförmig profilierte Enden 21 und rückwärtige bzw. innere Enden auf, zwischen welchen zum Beispiel eine Blattfeder 22 eingespannt ist, die die Klemmbacken 19 in ihre in Fig. 3 links unten gezeigte unwirksame Ausgangslage vorspannt.

Die Knotenstücke 14 und Stützen 11, 11' weisen, wie bereits erwähnt, das gleiche längsgeschlitzte Kreuzprofil auf. In Fig. 3 ist ein kreuzblockförmiges Knotenstück 14 im Detail gezeigt. Dieses Knotenstück 14 ist von einem z. B. aus Aluminium bestehenden Strangpressprofil abgeschnitten, aus dem auch die Stützen 11, 11' hergestellt sind, und es weist vier kreuzförmig angeordnete Arme 23 auf, welche nach außen offen Schlitze 24 enthalten, deren lichter schwalbenschwanzförmiger Querschnitt den hakenförmig profilierten Enden 21 der Klemmbacken 19 angepaßt ist, so daß letztere in diesen Schlitzen 24 verankert werden können. Zu diesem Zweck können die Klemmbacken 19 mittels einer Stellschraube 25 gespreizt werden, wie in Fig. 3 rechts oben angedeutet ist.

Zur Montage z.B. auf dem Boden werden die Gurtstäbe 12 bzw. 13 mittels ihrer Ausklinkung 160 von oben auf die Arme 23 des kreuzblockförmigen Knotenstückes 14 aufgesteckt, wobei sie sich mit einem Wandabschnitt 26 auf deren Armen 23 abstützen. Die Klemmverschlüsse bzw. deren Klemmbacken 19 befinden sich in dieser Phase in ihrer unwirksamen Ausgangslage (Fig. 3 links unten). Alsdann werden die Stellschrauben 25 der Klemmverschlüsse betätigt, um die Klemmbacken 19 zu spreizen, so daß deren hakenförmig profilierte Enden 21 gegen die hinterschnittenen Seitenwände der Schlitze 24 gedrückt werden. Die Stellschrauben 25 können mittels eines durch Bohrungen 35 in den Seitenwänden der Gurtstäbe 12 bzw. 13 eingeführten entsprechenden Schraubendrehers gedreht werden. In gleicher Weise werden die Gurtstäbe 12 an den oberen Enden der Stützen 11 bzw. 11' angeschlossen, die, wie schon erwähnt, das gleiche Querschnittsprofil wie die Knotenstücke 14 aufweisen und somit je ein Knotenstück 14 im Obergurt ersetzen.

Im Falle der eingespannten Stützen 11 (Fig. 1) sind noch jeweils vier Stäbe 27 vorgesehen, die sich von Knotenstücken 14 des Untergurts weg zu den Stützen 11 erstrecken und an diesen beispielsweise über in einer Nut geführte Blocks mit Gewindebohrung angeschraubt sein können.

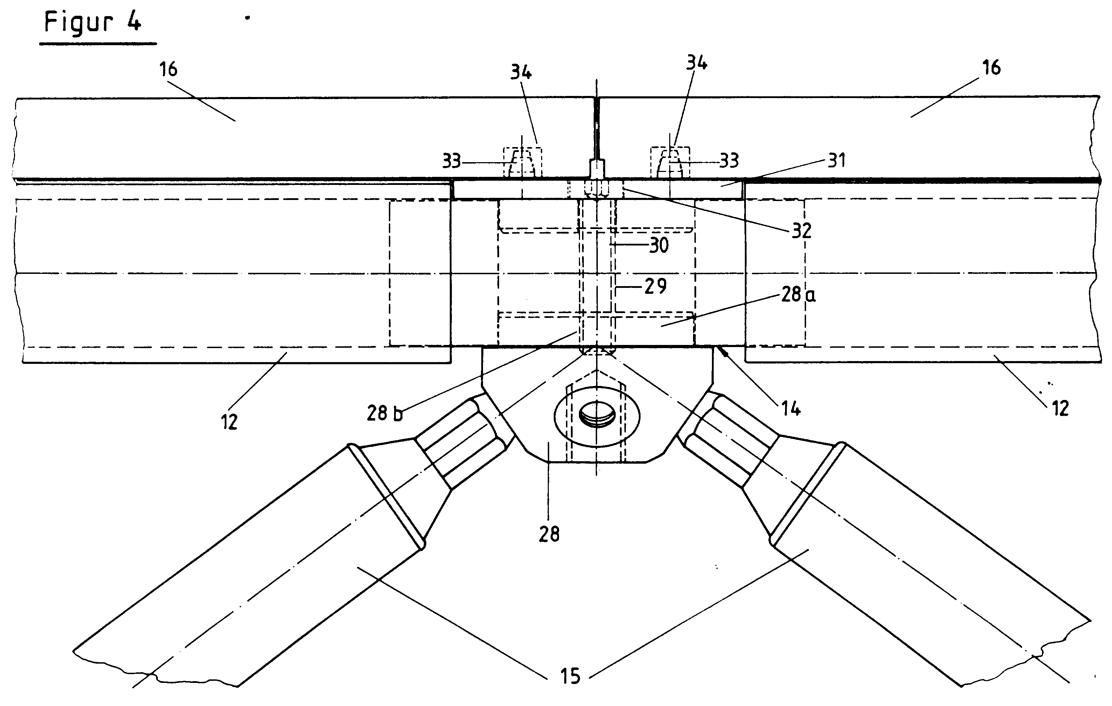

Die kreuzblockförmigen Knotenstücke 14 des Obergurts und Untergurts des Deckenrostes 10 sind jeweils an einer Stirnseite mit beispielsweise Kugelknotensegmenten 28 versehen, welche Gewindebohrungen zum Schraubanschluß der Diagonalstäbe 15 des zweilagigen Deckenrostes 10 enthalten. Diese Anschlußtechnik ist bekannt und bedarf daher keiner weiteren Erläuterung. Die Kugelknotensegmente 28 können beispielsweise einen flachen zylindrischen Vorsprung 28a (Fig. 4) aufweisen, der sich passend in eine zentrale Bohrung der Knotenstücke 14 erstreckt. In dem erwähnten Zapfen 28a des Kugelknotensegments 28 ist eine zentrale Gewindebohrung 28b vorgesehen, welche sich mit ihrem Schaft durch eine Borhung 32 in einer Kopfplatte 31 durch eine Bohrung 29 im Knotenstück 14 erstreckt. Die Kopfplatte 31 wird durch die Schraube 30 gegen das Knotenstück 14 gehalten (Fig. 4). Der Vorteil dieser Anordnung besteht darin, daß die Kugelknotensegmente 28 gegenüber den kreuzblockförmigen Knotenstücken 14, je nach der Geometrie des räumlichen Deckenrostes gedreht und anschließend mittels der Schrauben 30 fixiert werden können. Die Knotenstücke 14 im Untergurt des Deckenrostes 10 entsprechen demjenigen im Obergurt, die Kugelknotensegmente 28 dieser Knotenstücke sind jedoch entsprechend spiegelbildlich angeordnet.

Die Dicke der Kopfplatte 31 ist so bemessen, daß sie im montierten Zustand mit den Oberseiten der angschlossenen Gurtstäbe 12 fluchtet (Fig. 4). Beim Ausführungsbeispiel nach Fig. 3 und 4 weist jede Kopfplatte 31 vier kreuzförmig angeordnete Haltedorne 33 auf, die in entsprechende Ausnehmungen 34 an der Unterseite der Bodenplatten 16 eingreifen. Die Ecken von jeweils vier Bodenplatten 16 sind dadurch vertikal auf die Mittelachse eines jeden kreuzblockförmigen Knotenstückes 14 ausgefluchtet und ebenso auf die Längsachse der Stützen 11 bzw. 11'.

Der in Fig. 2 gezeigte Deckenrost 10 trägt Bodenplatten 16, ist demzufolge begehbar und randseitig mit einem Geländer 45 ausgestattet. Fig. 2a zeigt die Befestigung eines stehenden Geländerstabes 46 am Trägerrost 10.

Der Geländerstab 46 besteht beispielsweise aus einem Rundrohr, in dessen unteres Ende eine Platte 47 mit einer Gewindebohrung 48 eingeschweißt ist. Zwischen dem unteren Ende des Geländerstabes 46 und einer Bodenplatte 16 ist eine Fußplatte 49 angeordnet, die eine mittige Bohrung 50 aufweist. Ein verlängerter Gewindeabschnitt 51 der Befestigungsschraube 30 erstreckt sich durch eine Bohrung 52 in der Bodenplatte 16 und die Bohrung 50 in die Gewindebohrung 48. Diese Schraubverbindung ist durch eine Mutter 53 gekontert. Auf den Gewindeabschnitt 51 ist eine weitere Mutter 54 aufgedreht, welche die Kopfplatte 31 gegen das Knotenstück 14 hält. Die Befestigungsschraube 30 verbindet auch hier das Knotenstück 14 mit dem Kugelknotensegment 28. Zur Stabilisierung des Geländerstabes 46 dient ein Versteifungssteg 55, der einerseits am Knotenstück 14 und andererseits an einem Ring 56 mit zahlreichen Gewindebohrungen angeschraubt ist. Der Ring 56 und zwei weitere Ringe 56 sind am Geländerstab 46 befestigt, wobei die zwei oberen Ringe 56 zum Schraubanschluß der Horizontalstäbe 57 des Geländers 45 dienen.

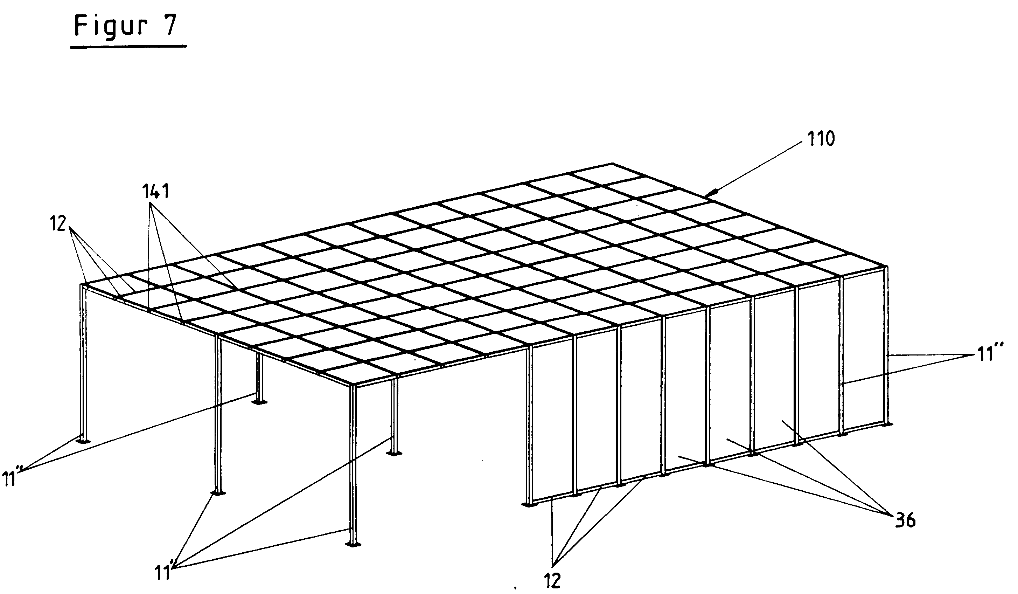

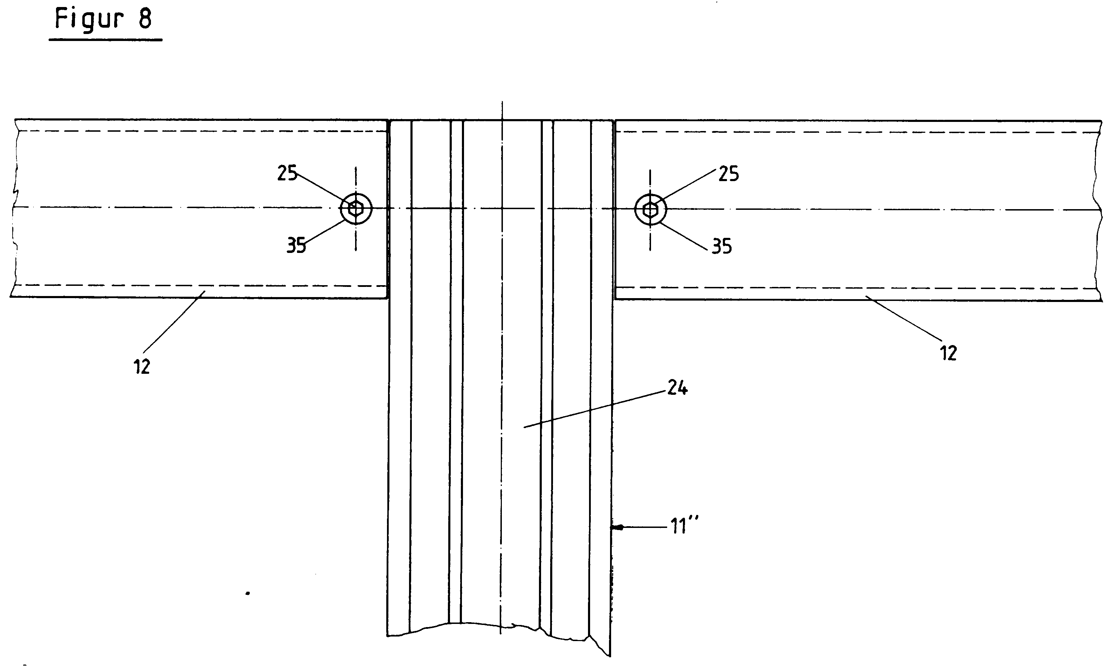

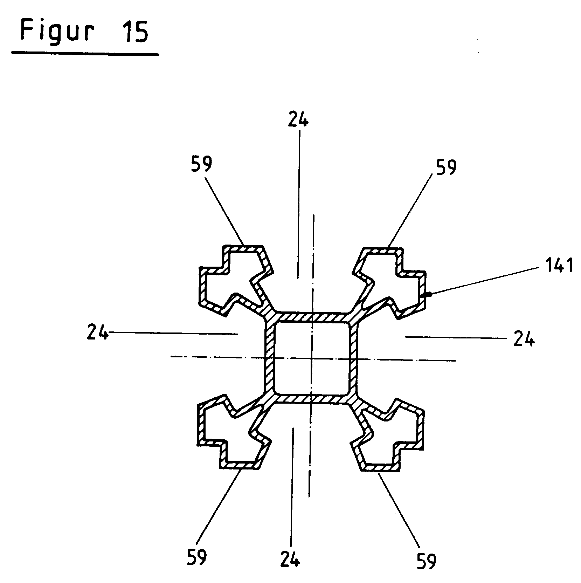

In Fig. 7 ist ein ebener bzw. einlagiger Deckenrost 110 gezeigt, der von zahlreichen Stützen 11'' (Fig. 15) getragen wird. Der Deckenrost 110 setzt sich aus Gurtstäben 12 und Knotenstücken 141 (Fig. 15) zusammen, die noch beschrieben werden. Der Profilquerschnitt der Knotenstücke 141 und Stützen 11''ist auch hier gleich und die Gurtstäbe 12 können daher an den oberen Enden der Stützen 11 in gleicher Weise angeschlossen werden wie an den Knotenstücken 141 wie aus Fig. 8 hervorgeht. In Fig. 8 sind auch die Bohrungen 35 in den Seitenwänden der aus Rechteckprofilrohren bestehenden Gurtstäbe 12 veranschaulicht, durch welche der Schraubendreher zur Betätigung der Stellschrauben 25 der Klemmverschlüsse eingeführt werden kann. Die Stützen 11'' schließen mit ihren oberen Enden im wesentlichen mit der Oberseite des Deckenrostes 110 ab. In den einander gegenüberliegenden Längsschlitzen 24 benachbarter Stützen 11'' am Rande des Deckenrostes 110 sind beispielsweise Wandelemente 36 eingesetzt. In diesem Fall sind die unteren Enden der Stützen 11'' durch weitere Gurtstäbe 12 miteinander verbunden. Solche Wandelemente 36 können bei entsprechender Anordnung der Stützen 11'' auch innerhalb des vom Deckenrost 110 begrenzten Grundrisses vorgesehen werden. Die Lücken zwischen den Gurtstäben 12 des Deckenrostes 110 können, sofern dieser nur dekorativen Zwecken dient, mit beliebigen Elementen aus Holz, Metall, Kunststoff oder textilem Material ausgefüllt werden.

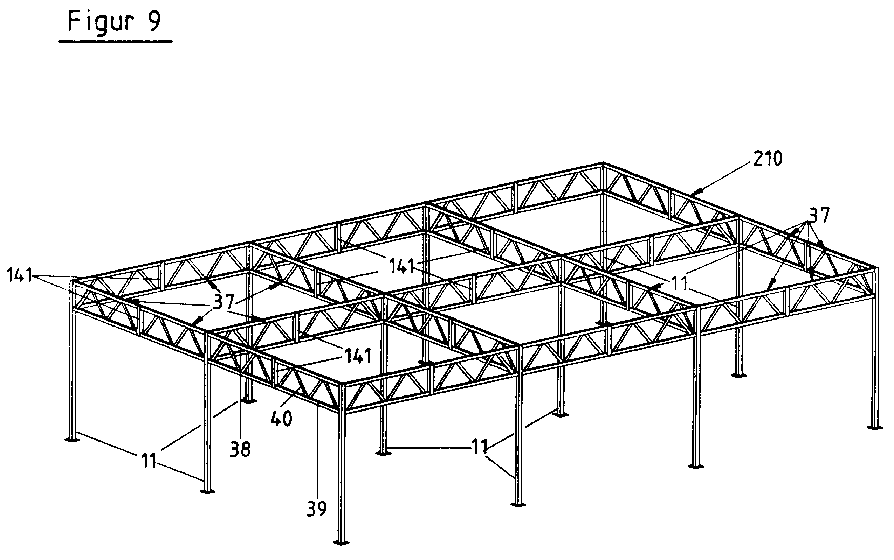

Beim Ausführungsbeispiel nach Fig. 9 weist der Deckenrost 210 sogenannte Gitterträger-Elemente 37 auf, die hochkant an den Stützen 11 und Knotenstücken 141 angeschlossen sind. Die Knotenstücke 141 weisen zu diesem Zweck eine entsprechend größere Länge auf, ihr Querschnittsprofil (Fig. 15) entspricht jedoch gleichfalls demjenigen der Stützen 11. Jedes Gitterträger-Element 37 besteht aus einem Ober- und Untergurtstab 38 bzw. 39, welche beispielsweise durch eine sogenannte Gitterschlange 40 miteinander verbunden sind. Die Gitterschlange 40 kann auch durch Einzelstege in flacher Ausführung, eventuell mit Lochung, ersetzt werden. Die Obergurtstäbe 38 und Untergurtstäbe 39 weisen das gleiche Rechteckprofil auf mit Nut zur Aufnahme der Einzelstege bzw. Gitterschlange. Der Anschluß der Stäbe 38, 39 an die oberen Enden der Stützen 11 und Knotenstücke 141 erfolgt wie beim Ausführungsbeispiel nach Fig. 3. Bei den Untergurtstäben 39 der Gitterträger-Elemente 37 stehen jedoch die profilierten Enden 21 der Klemmbacken 19 über die Stirnenden der Gurtstäbe 39 hervor, um ihre Einführung in die Schlitze 24 in den Knotenstücken 141 bzw. Stützen 11 zu ermöglichen. Auch bei diesem Ausführungsbeispiel schließen die Stüzen 11 mit ihren oberen Enden mit der Oberseite des Deckenrostes 210 bzw. der Gitterträger-Elemente 37 ab. Die Lücken zwischen den Gitterträger-Elementen 37 können beispielsweise durch nicht gezeigte textile Abschlußelemente ausgefüllt werden, die man an den Gitterträger-Elementen 37 befestigt.

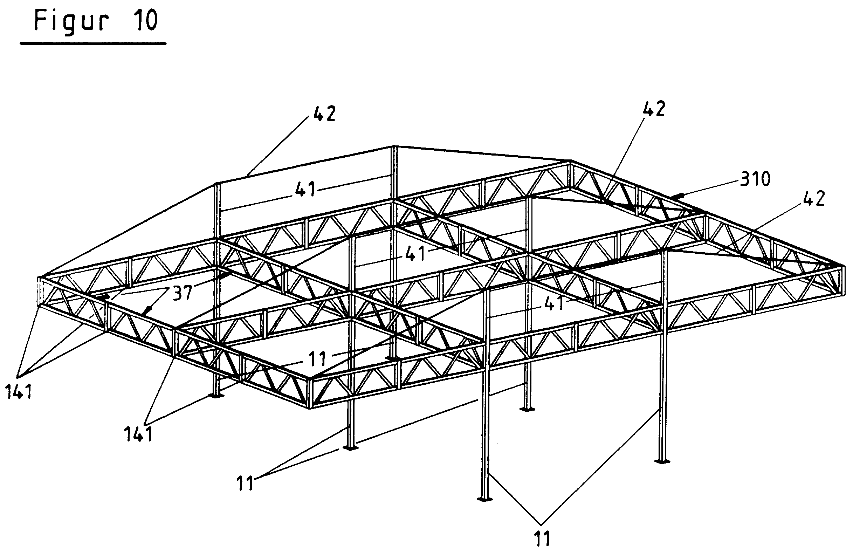

Auch der in Fig. 10 gezeigte Deckenrost 310 setzt sich aus Gitterträger-Elementen 37 zusammen, welche, wie beim Ausführungsbeispiel nach Fig. 9, an Stützen 11 und Knotenstücken 141 (Fig. 15) angeschlossen sind. Die Stützen 11 ragen bei diesem Ausführungsbeispiel jedoch mit ihren oberen Ende 41 pylonartig über den Deckenrost 310 hinaus und zwischen den oberen Enden 41 der Stützen 11 und dem Rand des Deckenrostes 310 sind Drahtseile 42 gespannt, die zur Stabilisierung des Deckenrostes 310 beitragen. Auch in diesem Fall können die Lücken zwischen den Gitterträger-Elementen 37 z.B. durch textile Abschlußelemente (sog. Segel oder Membranen) ausgefüllt werden.

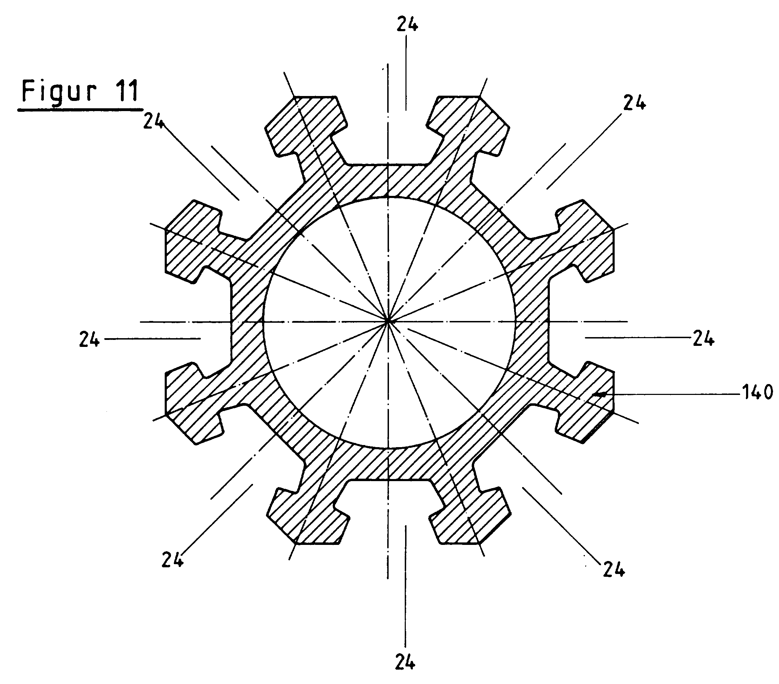

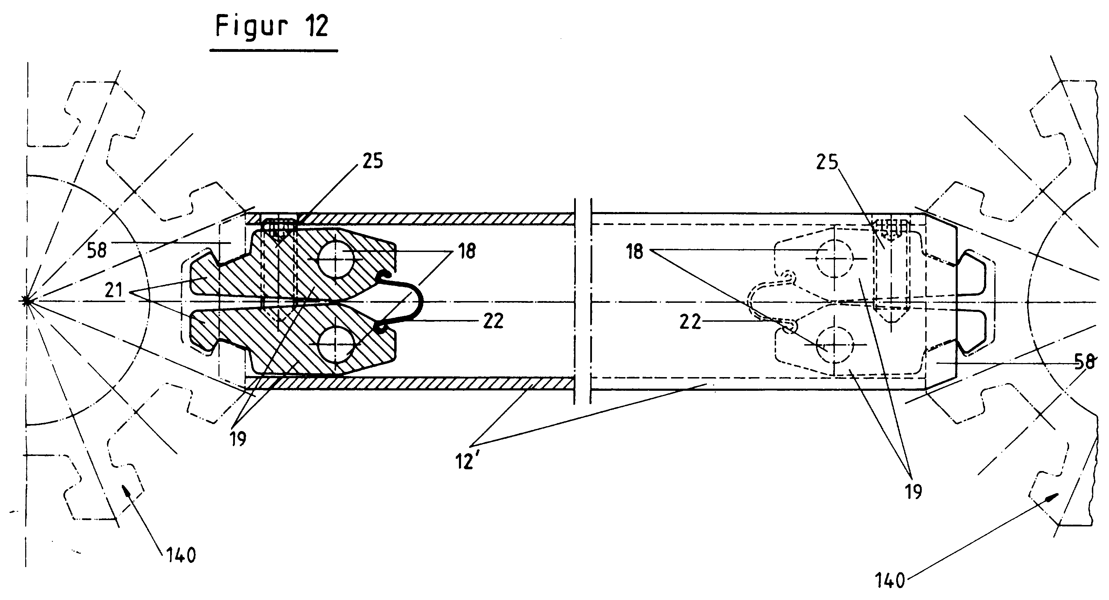

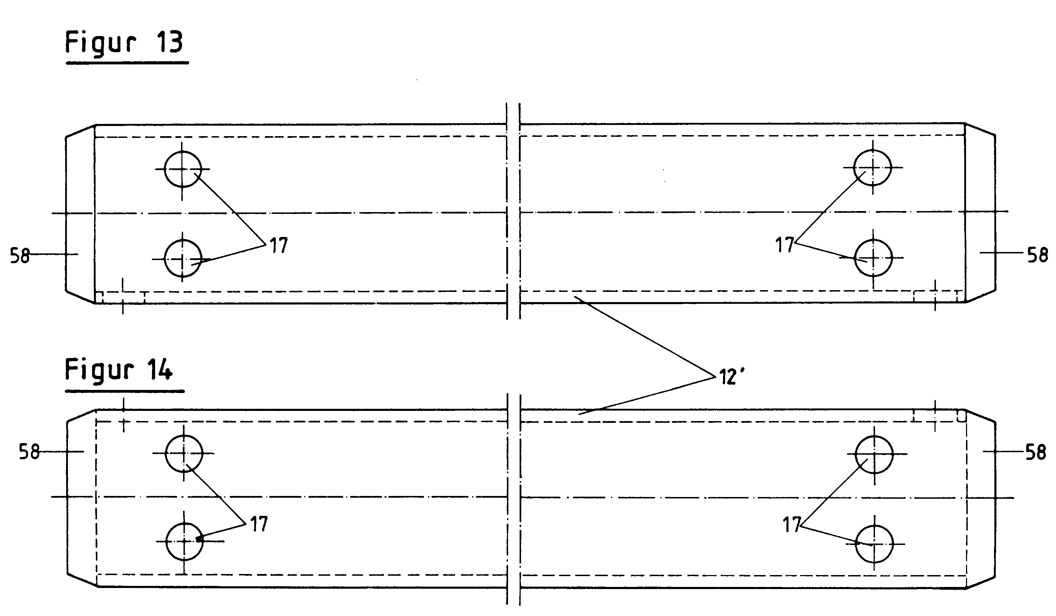

In Fig. 11 ist ein zum Beispiel aus Aluminium bestehendes Achtkant-Strangpreßprofil gezeigt, von dem Knotenstücke 140 abgeschnitten werden können, ähnlich dem Knotenstück 14 in Fig. 3. Aus diesem Achtkant-Strangpreßprofil können aber auch die Stützen 11 und 11' hergestellt werden. Ein solches Knotenstück 140 oder eine solche Stütze weist dann acht nach außen offene Schlitze 24 auf, deren lichter schwalbenschwanzförmiger Querschnitt gleichfalls den hakenförmig profilierten Enden 21 der Klemmbacken 19 angepaßt ist. Die Klemmbacken 19 können daher, wie beim Ausführungsbeispiel nach Fig. 3 in diesen Schlitzen 24 kraftschlüssig verankert werden, wie dies Fig. 12 zeigt. In Fig. 12 ist ein aus einem Rechteckprofilrohr bestehender Gurtstab 12' gezeigt, der zwischen zwei Knotenstücken 140 eingespannt ist. Der Gurtstab 12', welcher auch in den Fig. 13 und 14 gezeigt ist, ist ein durchgehendes Vierkantrohr mit je einem Vorsprung 58 an den Enden. Die Vorsprünge 58 dienen der Auflage des Gurtstabs 12' auf den Knotenstücken 140 bzw. Stützen aus dem gleichen Querschnittsprofil. Die Klemmverschlüsse mit den Klemmbacken 19 in den Enden des Gurtstabs 12' entsprechen denjenigen der Fig. 3 und es wird auf deren Beschreibung verwiesen.

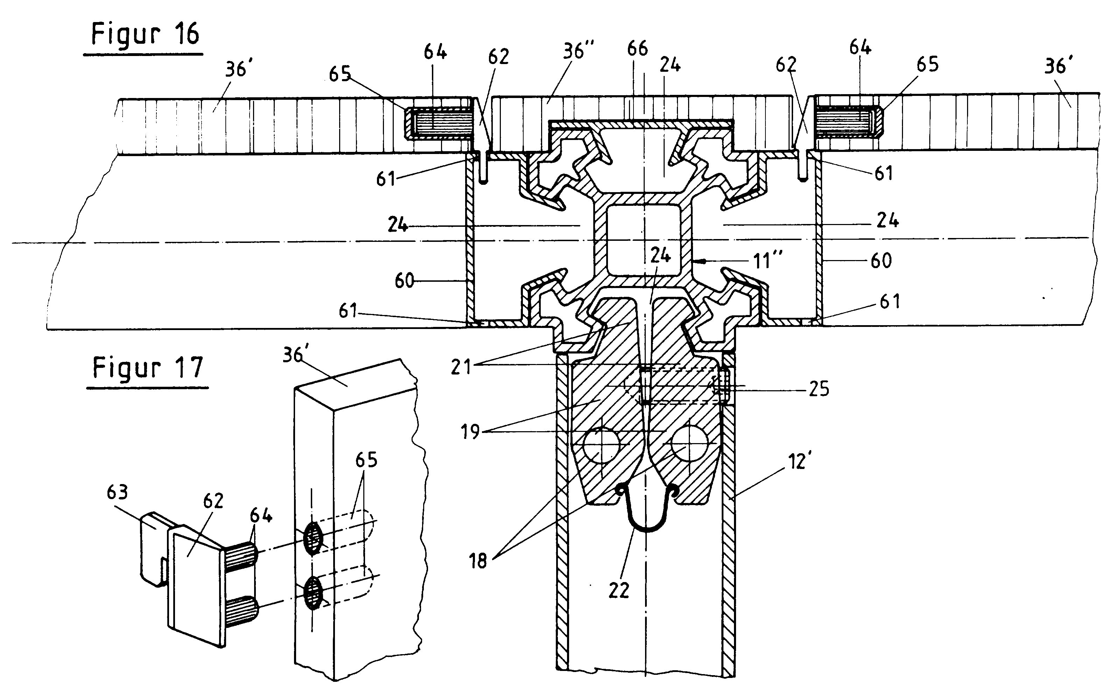

In Fig. 15 ist ein weiteres zum Beispiel aus Aluminium bestehendes Strangpreßprofil gezeigt, das man auch als vierstegiges Profil bezeichnen könnte, wobei die hohlen Stege 59 diagonal einander gegenüberliegend an einem Vierkantbasisprofil angeordnet sind. Auch aus diesem Strangpreßprofil können Knotenstücke 141 abgeschnitten werden oder es kann auch zur Herstellung von Stützen 11 '' (Fig. 7 und 16) dienen. Die vier hohlen Stege 59 begrenzen seitlich gleichfalls nach außen offene Längsschlitze 24, entsprechend den bereits beschriebenen Profilen. Der lichte schwalbenschwanzförmige Querschnitt dieser Längsschlitze 24 ist gleichfalls den hakenförmig profilierten Enden 21 der Klemmbacken 19 angepaßt. Die Klemmbacken 19 können daher in diesen Längsschlitzen 24 verankert werden (Fig. 16).

Wenn zum Beispiel eine Wandverkleidung an den Stützen 11'' angebracht werden soll, kann dies in der Art und Weise geschehen, wie in Fig. 16 gezeigt ist. Die Stützen 11'' weisen, wie schon erwähnt, das in Fig. 15 gezeigte Querschnittsprofil auf. An den Stützen 11'' können daher Gurtstäbe 12' mittels der bereits beschriebenen Klemmverschlüsse mit den Klemmbacken 19 befestigt und ggf. auch aufgelagert werden, wie beim Ausführungsbeispiel nach Fig. 12. In den anderen Längsschlitzen 24 der Stützen 11'' können Anschlußprofile 60 eingeschnappt bzw. klemmend befestigt werden. Diese Anschlußprofile 60 sind mit einer Reihe von Schlitzen 61 versehen, in welche Wandhalter 62 mittels entsprechender Haken 63 eingehängt werden können. Die Wandhalter 62 weisen z.B. jeweils zwei Zapfen 64 auf, die in Bohrungen 65 in Wandelementen 36' eingesteckt werden können. Abdeckstreifen 36'' können mittels eines Anschlußprofils 66 unmittelbar an den Stützen 11'' zwischen den Wandelementen 36' befestigt werden. Die Anschlußprofile 66 können gleich den Anschlußprofilen 60 mittels entsprechender federnder Stege in die Längsschlitze 24 eingeklippst werden. Auf diese Weise kann eine praktisch durchgehende Wand vor den Stützen 11 '' angeordnet werden, sodaß letztere verdeckt bleiben bzw. von außen nicht sichtbar sind.

## Patentansprüche

1. Ebener oder räumlicher Deckenrost aus Stäben und Knotenstücken, insbesondere begehbarer Deckenrost, mit Stützen, welche den Deckenrost tragen, wobei die Stützen und die Knotenstücke ein gleiches längsgeschlitztes Profil aufweisen und die Stützen in ihrem Anschlußbereich die Knotenstücke ersetzen und die Gurtstäbe des Deckenrostes an den Knotenstücken und Stützen durch in deren Schlitze befestigbte Anschlußelemente angeschlossen sind,
dadurch **gekennzeichnet**,
daß die Anschlußelemente als Klemmverschlüsse (18 bis 22) ausgebildet sind, die zur Klemmung gegen Seitenwände der Längsschlitze (24) verspreizt sind.

2. Deckenrost nach Anspruch 1, dadurch gekennzeichnet, daß die Stützen (11) und Knotenstücke (14) ein Mehrkantprofil, ein Kreuzprofil oder ein anderes mehrarmiges bzw. mehrstegiges Profil aufweisen.

3. Deckenrost nach Anspruch 1 oder 2, dadurch gekennzeichnet, daß die Knotenstücke (14) an einer Stirnseite durch Knotensegmente (28) mit Gewindebohrungen zum Schraubanschluß von Diagonalstäben (15) eines räumlichen Deckenrostes (10) ergänzt sind.

4. Deckenrost nach Anspruch 3, dadurch gekennzeichnet, daß die Knotensegmente (28) gegenüber den Knotenstücken (14) drehbar und feststellbar angeordnet sind.

5. Deckenrost nach Anspruch 3, dadurch gekennzeichnet, daß das Knotensegment (28) mittels einer sich durch zentrale Bohrungen (29, 32) im Knotenstück (14) und in einer Kopfplatte (31) erstreckenden Schraube (30) mit dem Knotenstück (14) verbunden ist.

6. Deckenrost nach Anspruch 5, dadurch gekennzeichnet, daß die das Knotenstück (14) mit dem Knotensegment (28) verbindende Schraube (30) nach oben verlängert ist (51) und zugleich zur Befestigung eines auf dem Deckenrost (10) stehenden Stabes, z.B. eines Geländerstabes (46) dient.

7. Deckenrost nach Anspruch 5, dadurch gekennzeichnet, daß die Kopfplatte (31) mit vier kreuzförmig angeordnete Haltedorne (33) für auf dem Deckenrost (10) zu verlegende Bodenplatten (16) versehen ist, die entsprechende Ausnehmungen (34) zur Aufnahme der Haltedorne (33) auweisen.

8. Deckenrost nach Anspruch 1, dadurch gekennzeichnet, daß die Gurtstäbe (12) des Deckenrostes (10; 110) zusätzlich auf den Knotenstücken (14) und Stützen (11) aufgelagert sind.

9. Deckenrost nach Anspruch 1 oder 8, dadurch gekennzeichnet, daß die Klemmverschlüsse jeweils zwei um lotrechte Achsen in den Enden der Gurtstäbe (12) drehbar gelagerte Klemmbacken (19) aufweisen, die durch eine Feder (22) in ihre unwirksame Ausgangslage zusammengehalten werden und durch eine Stellschraube (25) in ihre wirksame Lage spreizbar sind, in welcher die äußeren profilierten Enden (21) der Klemmbacken (19) form- und kraftschlüssig in die entsprechend profilierten Schlitze (24) in den Knotenstücken (14) und Stützen (11) eingreifen.

10. Deckenrost nach einem der Ansprüche 1-9, dadurch gekennzeichnet, daß die Stützen (11) an ihren oberen Enden mit der Oberseite des Deckenrostes (10, 110, 210) abschließen.

11. Deckenrost nach einem der Ansprüche 1-9, dadurch gekennzeichnet, daß die Stützen (11) mit ihren oberen Enden (41) pylonartig über dem Deckenrost (310) hervorstehen.

12. Deckenrost nach Anspruch 11, dadurch gekennzeichnet, daß zwischen den oberen Enden (41) der Stützen (11) und dem Deckenrost (310) mittels Seilen (42) eine Verspannung vorgesehen ist.

13. Deckenrost nach einem der Ansprüche 1-12, dadurch gekennzeichnet, daß der Deckenrost (210, 310) aus Gitterträger-Elementen (37) besteht, die hochkant an den Stützen (11) und Knotenstücken (14') angeschlossen sind, deren Länge im wesentlichen der Bauhöhe der Gitterträger-Elemente (37) entspricht.

14. Deckenrost nach Anspruch 13, dadurch gekennzeichnet, daß die Lücken zwischen den Gitterträger-Elementen (37) durch Abschlußelemente, z. B. Segel oder Membranen aus textilem Material ausgefüllt sind.

15. Deckenrost nach einem der Ansprüche 1-14, dadurch gekennzeichnet, daß in die einander gegenüberliegenden Längsschlitze (24) benachbarter Stützen (11) unterhalb des Deckenrostes (110) Wandelemente (36) einsetzbar sind.

16. Deckenrost nach einem der Ansprüche 1-14, dadurch gekennzeichnet, daß in die Längsschlitze (24) der Stützen (11'') unterhalb des Deckenrostes Anschlußprofile (60) für Wandelemente (36') einklemmbar sind.

## Claims

1. Planar or spatial ceiling grid made of bars and nodal pieces, in particular a ceiling grid that can be walked on, with supports which carry the said ceiling grid, wherein the supports and the nodal pieces have an identical, longitudinally slotted profile and the supports, in their connecting region, replace the nodal pieces, and the boom bars of the ceiling grid are connected at the nodal pieces and supports by connecting elements fastened in their slots,
**characterised in that**
the connecting elements are constructed as wedging closures (18 to 22) which are braced for wedging against side walls of the longitudinal slots (24).

2. Ceiling grid according to claim 1, characterised in that the supports (11) and nodal pieces (14) have a polygonal profile, a cross-type profile, or some other multi-arm or multi-web profile.

3. Ceiling grid according to claim 1 or 2, characterised in that the nodal pieces (14) are supplemented, on one end face, by nodal segments (28) with threaded bores for the screwed connection of diagonal bars (15) belonging to a spatial ceiling grid (10).

4. Ceiling grid according to claim 3, characterised in that the nodal segments (28) are disposed so as to be rotatable and lockable in position in relation to the nodal pieces (14).

5. Ceiling grid according to claim 3, characterised in that the nodal segment (28) is joined to the nodal piece (14) by means of a screw (30) extending through central bores (29, 32) in the nodal piece (14) and in a top plate (31).

6. Ceiling grid according to claim 5, characterised in that the screw (30) joining the nodal piece (14) to the nodal segment (28) is prolonged upwards (51) and at the same time serves for fastening a bar, for example a handrail bar (46), standing on the ceiling grid (10).

7. Ceiling grid according to claim 5, characterised in that the top plate (31) is provided with four holding pins (33), which are disposed in the shape of a cross, for floor panels (16) which are to be laid on the ceiling grid (10) and which have corresponding recesses (34) for receiving the holding pins (33).

8. Ceiling grid according to claim 1, characterised in that the boom bars (12) of the ceiling grid (10; 110) are additionally superposed on the nodal pieces (14) and supports (11).

9. Ceiling grid according to claim 1 or 8, characterised in that the wedging closures have, in each case, two wedging jaws (19) which are mounted for rotation about vertical spindles in the ends of the boom bars (12), are held together by a spring (22) in their inoperative starting position and can be spread apart, by an adjusting screw (25), into their operative position in which the outer profiled ends (21) of the wedging jaws (19) engage, in a positive-locking and non-positive-locking manner, in the correspondingly profiled slots (24) in the nodal pieces (14) and supports (11).

10. Ceiling grid according to one of claims 1 to 9, characterised in that the supports (11) terminate, at their upper ends, with the upper side of the ceiling grid (10, 110, 210).

11. Ceiling grid according to one of claims 1 to 9, characterised in that the supports (11) protrude above the ceiling grid (310) with their upper ends (41) in a pylon-like manner.

12. Ceiling grid according to claim 11, characterised in that bracing is provided between the upper ends (41) of the supports (11) and the ceiling grid (310) by means of cables (42).

13. Ceiling grid according to one of claims 1 to 12, characterised in that the ceiling grid (210, 310) consists of lattice-carrier elements (37) which are connected on edge at the supports (11) and nodal pieces (14 ), the length of which essentially corresponds to the structural height of the said lattice-carrier elements (37).

14. Ceiling grid according to claim 13,
characterised in that the gaps between the lattice-carrier elements (37) are filled up by closing-off elements, for example sails or membranes made of textile material.

15. Ceiling grid according to one of claims 1 to 14, characterised in that wall elements (36) can be inserted underneath the ceiling grid (110) in the longitudinal slots (24), which are located opposite one another, of adjacent supports (11).

16. Ceiling grid according to one of claims 1 to 14, characterised in that connecting profiles (60) for wall elements (36') can be wedged into the longitudinal slots (24) of the supports (11"), underneath the ceiling grid.

## Revendications

1. Treillis de plafond plan ou tridimensionnel composé de tiges et d'éléments nodaux, en particulier treillis de plafond adapté à la marche, comportant des poteaux supportant le treillis de plafond, les poteaux et les éléments nodaux présentant un même profil fendu longitudinalement, et les poteaux remplaçant, au niveau de leur zone de raccordement, les éléments nodaux, et les tiges de membrure du treillis de plafond étant reliées aux éléments nodaux et aux poteaux par l'intermédiaire d'éléments de liaison fixés dans les fentes de ceux-ci, caractérisé en ce que les éléments de liaison sont réalisés sous forme de pinces de serrage (18 à 22) qui, pour effectuer le serrage, sont écartées pour se serrer contre des parois latérales des fentes longitudinales (24).

2. Treillis de plafond selon la revendication 1, caractérisé en ce que les poteaux (11) et les éléments nodaux (14) présentent un profil polygonal, un profil en croix ou un autre profil à plusieurs bras ou plusieurs nervures.

3. Treillis de plafond selon la revendication 1 ou 2, caractérisé en ce que les éléments nodaux (14) sont complétés, sur l'une de leurs faces frontales par des segments nodaux (28) comportant des trous taraudés pour le raccordement à vis de tiges diagonales (15) d'un treillis de plafond (10) tridimensionnel.

4. Treillis de plafond selon la revendication 3, caractérisé en ce que les segments nodaux (28) sont disposés de façon à pouvoir tourner et à pouvoir être bloqués par rapport aux éléments nodaux (14).

5. Treillis de plafond selon la revendication 3, caractérisé en ce que le segment nodal (28) est relié à l'élément nodal (14) par l'intermédiaire d'une vis (30) s'étendant à travers des trous centraux (29, 32) ménagés dans l'élément nodal (14) et dans une plaque de tête (31).

6. Treillis de plafond selon la revendication 5, caractérisé en ce que la vis (30) qui relie l'élément nodal (14) au segment nodal (28) se prolonge vers le haut (51) et sert en même temps à la fixation d'un montant installé sur le treillis de plafond (10), par exemple un montant (46) de garde-corps.

7. Treillis de plafond selon la revendication 5, caractérisé en ce que la plaque de tête (31) est pourvue de quatre goujons d'arrêt (33) disposés en croix, prévus pour des dalles de plancher (16) à installer sur le treillis de plafond (10), pourvues d'évidements correspondants (34) destinés à recevoir les goujons d'arrêt (33).

8. Treillis de plafond selon la revendication 1, caractérisé en ce que les tiges de membrure (12) du treillis de plafond (10 ; 110) s'appuient en outre sur les éléments nodaux (14) et les potaux (11).

9. Treillis de plafond selon la revendication 1 ou 8, caractérisé en ce que les pinces de serrage comportent chacune deux mâchoires (19) de serrage montées de façon pivotante sur des axes verticaux placés dans les extrémités des tiges de membrure (12), les mâchoires étant maintenues dans leur position inactive de départ au moyen d'un ressort (22), et pouvant être écartées et amenées dans leur position active au moyen d'une vis de réglage (25), position dans laquelle les extrémités profilées extérieures (21) des mâchoires de serrage (19) s'engagent par conjugaison des formes et par adhérence dans les fentes (24) présentant un profil correspondant, ménagées dans les éléments nodaux (14) et dans les poteaux (11).

10. Treillis de plafond selon l'une des revendications 1 à 9, caractérisé en ce que les extrémités supérieures des poteaux (11) sont alignées sur la face supérieure du treillis de plafond (10, 110, 210).

11. Treillis de plafond selon l'une des revendications 1 à 9, caractérisé en ce que les extrémités supérieures (41) des poteaux (11) dépassent au-dessus du treillis de plafond (310) en formant des pylônes.

12. Treillis de plafond selon la revendication 11, caractérisé en ce qu'un haubanage réalisé au moyen de câbles (42) est prévu entre les extrémités supérieures (41) des poteaux (11) et le treillis de plafond.

13. Treillis de plafond selon l'une des revendications 1 à 12, caractérisé en ce que le treillis de plafond (210, 310) est composé d'éléments de poutrelles en treillis (37) reliés de chant aux poteaux (11) et aux éléments nodaux (14), dont la longueur correspond pour l'essentiel à l'encombrement en hauteur des éléments de poutrelles en treillis (37).

14. Treillis de plafond selon la revendication 13, caractérisé en ce que les vides entre les poutrelles en treillis (37) sont fermés par des éléments de fermeture, par exemple de la toile ou des membranes en matériau textile.

15. Treillis de plafond selon l'une des revendications 1 à 14, caractérisé en ce que des éléments de cloisons (36) peuvent être insérés dans les fentes longitudinales (24) de potaux (11) voisins respectivevement opposées l'une à l'autre, en-dessous du treillis de plafond (110).

16. Treillis de plafond selon l'une des revendications 1 à 14, caractérisé en ce que des profilés de raccordement (60) pour éléments de cloisons (36') peuvent être coincés dans les fentes longitudinales (24) des poteaux (11"), en-dessous du treillis de pfafond.
